Europäisches Patentamt

European Patent Office

Office européen des brevets

(11) Veröffentlichungsnummer: **0 516 060 A2**

# (12) EUROPÄISCHE PATENTANMELDUNG

(21) Anmeldenummer: **92108872.0**

(22) Anmeldetag: **26.05.92**

(51) Int. Cl.⁵: **B09B 3/00,** B03B 9/06

(30) Priorität: **31.05.91 DE 4117926**

(43) Veröffentlichungstag der Anmeldung:
**02.12.92 Patentblatt 92/49**

(84) Benannte Vertragsstaaten:
**BE DE ES FR GB IT NL**

(71) Anmelder: **CAT - CONSULT GmbH
Hasselbeckerstrasse 4
W-4030 Ratingen 1(DE)**

(72) Erfinder: **Baas, Friedrich
Benediktusstrasse 10a
W-4000 Düsseldorf(DE)**
Erfinder: **Werning, Wolfgang, Dipl.-Ing.
Nussbaumweg 1
W-4030 Ratingen 1(DE)**

(74) Vertreter: **Langmaack, Jürgen, Dipl.-Ing. et al
Patentanwälte Maxton . Maxton . Langmaack
Goltsteinstrasse 93 Postfach 51 08 06
W-5000 Köln 51(DE)**

(54) **Verfahren und Anlage zur Kontrolle und zur Vorsortierung von aufzubereitenden Abfällen bei der Anlieferung.**

㊗ Die Erfindung betrifft ein Verfahren zur Kontrolle und zur Vorsortierung von aufzubereitenden Abfällen bei der Anlieferung. Hierbei ist vorgesehen, daß jede Einheit angelieferter Abfälle gesondert aufgenommen und markiert wird, daß jeweils die gesondert aufgenommene markierte Einheit in ihrer Schüttdichte durch Ausbreiten vermindert und hierbei einer optischen und/oder automatisierten Kontrolle über Detektoren in bezug auf Zusammensetzung und/oder das Vorhandensein von Störstoffen unterzogen wird, daß etwa festgestellte Störstoffmengen ausgeschieden und in bezug auf die markierte Einheit registriert werden und daß die vorkontrollierten Abfallmengen der weiteren Behandlung zugeführt werden.

Fig. 1

EP 0 516 060 A2

Die Erfindung betrifft ein Verfahren zur Kontrolle und zur Vorsortierung von aufzubereitenden Abfällen bei der Anlieferung.

In allen Fällen, in denen Haus-, Gewerbe- und/oder Industrieabfälle nicht unmittelbar auf einer Deponie abgekippt, sondern zu Zwecken des Recyclings zu einer Abfallaufbereitungsanlage gefahren werden, oder auch im Zusammenhang mit einer Abfallverbrennungsanlage, ist es zweckmäßig, die Abfälle bereits bei der Anlieferung einer Kontrolle daraufhin zu unterwerfen, ob die jeweils angelieferte Ladung sogenannte Störstoffe enthält, die von ihrer Natur aus von vorne herein auf einer Sonderdeponie abgelagert werden müssen, oder die infolge ihrer ungenügenden Zerkleinerung in der nachgeschalteten Anlage nicht ohne weiteres verarbeitet werden können. Hierzu gehören beispielsweise im Rahmen einer Müllverbrennungsanlage auch solche Stoffe, die grundsätzlich zwar verbrannt werden dürfen, die aber in der jeweiligen Ladung in einer solchen Konzentration angeliefert werden, daß sie nur in einer entsprechenden "Verdünnung" aufgegeben werden dürfen. Dies ist beispielsweise der Fall, wenn ein Müllsammelfahrzeug PVC-Abfälle nicht in der üblichen Beimischung zu Hausabfällen anliefert, sondern wenn eine ganze Fahrzeugladung aussschließlich mit derartigen PVC-Abfällen angeliefert wird. Da üblicherweise Müllsammelfahrzeuge oder auch Container von Müllpressen die Abfälle in sehr kompaktierter Form anliefern, ist die Kontrolle beim Abkippen in einer derartigen Aufbereitungsanlage kaum möglich. Etwaige Störstoffe werden sehr viel später im Rahmen der Aufarbeitung und Mischung und das auch nur sehr oberflächlich festgestellt.

Der Erfindung liegt nun die Aufgabe zugrunde, ein Verfahren zu schaffen, daß eine zuverlässige Kontrolle und Vorsortierung der angelieferten Abfälle im Anlieferungsbereich ermöglicht.

Diese Aufgabe wird gemäß der Erfindung dadurch gelöst, daß jede Einheit angelieferter Abfälle gesondert aufgenommen und markiert wird, daß jeweils die gesondert aufgenommene markierte Einheit in ihrer Schüttdichte durch Ausbreiten vermindert und hier einer optischen und/oder automatisierten Kontrolle über Detektoren in bezug auf Zusammensetzung und/oder das Vorhandensein von Störstoffen unterzogen wird, daß festgestellte Störstoffmengen ausgeschieden und in bezug auf die markierte Einheit registriert werden und daß die vorkontrollierten Abfallmengen der weiteren Behandlung zugeführt werden. Dadurch, daß jeweils jede Einheit der angelieferten Abfälle für sich in ihrer Schüttdichte durch Ausbreiten vermindert wird und auf Störstoffe hin untersucht wird, ist es möglich, jede angelieferte Einheit dem jeweiligen Anlieferer zuzuordnen. Enthält nun eine solche Einheit Störstoffe, die in einer Recycling-Anlage und/oder einer Verbrennungsanlage nicht verwertet werden dürfen, sondern auf einer Sonderdeponie abgelegt werden müssen, dann ist es möglich, für die hiermit verbundenen Kosten aufgrund der Zuordnung den jeweiligen Anlieferer haftbar zu machen. Hierdurch können Versuche unterbunden werden, Sonderabfälle in normalen Haus- und/oder Gewerbeabfällen zu "verstecken", um den Aufwand für die Ablagerung auf einer Sonderdeponie zu vermeiden. Ein weiterer Vorteil auch für die nachgeschaltete Aufbereitungsanlage besteht darin, daß sperrige Bestandteile, wie beispielsweise Bretter, Latten, großformatige Plastikplanen oder dergl., durch das Ausbreiten bereits im Anlieferungsbereich erfaßt und ggf. einer zusätzlichen Vorbehandlung durch Zerkleinern oder dergl. unterworfen werden können und somit Störungen in den nachgeschalteten Aufbereitungsanlagen, wie Förderbändern, Sieben oder dergl., vermieden werden.

In einer bevorzugten Ausgestaltung des erfindungsgemäßen Verfahrens ist vorgesehen, daß die Verminderung der Schüttdichte durch fortlaufendes Ausbreiten in einer Linie erfolgt. Dies hat den Vorteil, daß der angelieferte Abfall in einem Haufwerk ausgebreitet wird, das von den Seiten her gut zugänglich ist und mit den üblichen Fördermitteln in einfacher Weise abzutransportieren ist.

In einer besonders bevorzugten Ausgestaltung des erfindungsgemäßen Verfahrens ist jedoch vorgesehen, daß das Ausbreiten in einer Linie durch Abkippen bei fortlaufendem Abtransport der jeweils abkippenden Menge erfolgt. Hierdurch läßt sich ein hoher Mechanisierungsgrad des erfindungsgemäßen Verfahrens erreichen, da beim Anliefern der Abfälle diese zunächst jeweils in einzelne größere Container abgeworfen werden, wobei die aus dem Fahrzeug abkippende Ladung bereits aufgelockert wird. Dies ist insbesondere dann vorteilhaft, wenn wie üblich, Trommel- oder Preßmüllwagen die Anlieferung besorgen, die bei der Aufnahme der Abfälle diese zunächst einmal verdichten. Die in den Behältern aufgenommene aufgelockerte Abfallmenge, die die markierte Einheit darstellen, können dann auf ein Förderband abgekippt werden, das ein fortlaufendes Ausbreiten in einer Linie bewirkt. In zweckmäßiger weiterer Ausgestaltung des erfindungsgemäßen Verfahrens ist vorgesehen, daß das Ausbreiten in wenigstens zwei aufeinanderfolgenden Stufen erfolgt, wobei die weitere Verringerung der Schüttdichte durch Abwurf auf eine zweite Transportlinie mit höherer Transportgeschwindigkeit erfolgt.

Die Erfindung betrifft ferner eine Anlage zum Kontrollieren und Vorsortieren von aufzubereitenden Abfällen, bei der die von Fahrzeugen angelieferten Abfälle zunächst abgekippt und auf das Vorhandensein von Störstoffen kontrolliert werden, bevor sie der weiteren Behandlung unterworfen werden, insbesondere zur Durchführung des erfindungsgemäßen Verfahrens. Für eine derartige Anlage ist erfindungsgemäß vorgesehen, daß zur Aufnahme der von jedem Fahrzeug abzukippenden Ladung (Einheit) an der Abkippstelle ein gesonderter Behälter vorgesehen ist, daß eine Transporteinrichtung für die einzelnen Behälter vorgesehen ist, die die Aufnahmestelle mit einer Kippvorrichtung für die Behälter verbindet, daß der Abkippvorrichtung ein Fördermittel für die jeweils abzukippende Einheit, vorzugsweise wenigstens ein Förderband, zur Verminderung der Schüttdichte vorgesehen ist und daß eine ansteuerbare Vorrichtung zum Abweisen etwa festgestellter Störstoffe aus dem Förderstrom vorgesehen ist. Eine derartige Anlage hat den Vorteil, daß die jeweils angelieferten Abfälle über eine Identifizierungskennzeichnung dem jeweiligen Anlieferer zugeordnet werden und gesondert gehandhabt werden können. Durch das Abkippen aus dem Fahrzeug in den Behälter, der vorzusgweise ein größeres Fassungsvolumen aufweist als das Fassungsvolumen der üblicherweise verwendeten Abfalltransportfahrzeuge,wird die abzukippende Abfalladung bereits aufgelockert. Bei einer visuellen Kontrolle der in den Behälter hineinfallenden Ladung durch eine Aufsichtsperson, können hier bereits auffällige Störstoffkonzentrationen festgestellt werden. Besteht beispielsweise die Ladung überwiegend aus Abfällen, die auf einer Sonderdeponie zu lagern sind, dann kann dieser Behälter ohne Mühen aus dem normalen Behandlungsablauf herausgezogen und für eine Ablagerung auf der Sonderdeponie vorbereitet werden. Zugleich kann, da die eindeutige Zuordnung zwischen dem Anlieferer und dem Behälter über die Identifizierungskennzeichnung möglich ist, der Anlieferer für die unerlaubte Anlieferung von Sonderabfällen haftbar gemacht werden. Im normalen Ablauf wird der einzelne Behälter nun von der Aufnahmestelle, ggf. nach einer Zwischenlagerung in einem Pufferlager, wie es beispielsweise für Verbrennungsanlagen erforderlich ist, über eine Abkippvorrichtung auf ein Förderband abgekippt, wobei die abkippende Ladung durch den Abtransport in einer Linie durch Ausbreiten in verhältnismäßig geringe Schichthöhe aufgelockert wird, so daß in einer normalen Abfalladung enthaltene einzelne Störstoffe, beispielsweise eine einzelne Autobatterie, aus dem Förderstrom entfernt werden können. Die Kontrolle auf das Vorhandensein von Störstoffen kann hierbei visuell durch eine erfahrene Bedienungsperson und/oder über entsprechende Detektoren, die über der Förderlinie angeordnet sind, erfolgen. Da ein sogenanntes Leseband eine relativ geringe Laufgeschwindigkeit aufweist und daher zum automatischen Vermindern der Schüttdichte nicht geeignet ist, erlaubt die Anordnung einer ansteuerbaren Abweisevorrichtung eine Mechanisierung, mit deren Hilfe dann aus dem relativ schnell laufenden Förderband festgestellte Störstoffe abgeworfen werden, so daß lediglich die zusammen mit den Störstoffen, beispielsweise eine Autobatterie, abgeworfenen Abfallmengen von Hand sortiert werden müssen.

In besonders vorteilhafter Ausgestaltung der erfindungsgemäßen Anlage ist vorgesehen, daß das Fördermittel zur Verminderung der Schüttdichte wenigstens zwei Förderbänder aufweist, wobei das zweite Förderband mit höherer Fördergeschwindigkeit läuft als das erste Förderband. Diese Anordnung hat den Vorteil, daß das erste Förderband, auf das die Ladung aus dem Behälter abgekippt wird, keine so hohe Laufgeschwindigkeit aufweisen muß und etwaige Störungen durch das ungleichmäßige und/oder klumpenweise Herausfallen des Behälterinhaltes auf das Förderband vermieden werden, aber noch keine optimale Verminderung der Schüttdichte erreicht werden kann. Durch das erste Förderband wird der Behälterinhalt noch in relativ hoher Schüttdichte in einer Linie auseinandergezogen und erst durch das schneller laufende zweite Förderband erfolgt dann die Auflockerung mit geringer Schüttdichte und auf einer verhältnismäßig geringen Schichthöhe, die die Kontrolle auf Störstoffe erleichtert. Zweckmäßigerweise ist hierbei vorgesehen, daß an der Abkippstelle oberhalb des ersten Förderbandes ein grober Rost angeordnet ist, der sperrige Teile, beispielsweise lange Bretter, Latten, Metallstangen oder dergl., zurückhält, die den nachfolgenden Transport auf einem Förderband erheblich stören können. Über einen Rechen oder dergl. kann nach jedem Abkippvorgang dieser Rost freigeräumt werden.

In einer besonders vorteilhaften Ausgestaltung der erfindungsgemäßen Anlage ist ferner vorgesehen, daß das erste Förderband zumindest über einen Teil seiner Länge unter einem Winkel aufwärts fördert. Eine derartige Anordnung hat den Vorteil, daß trotz der relativ hohen Beladung bereits auf dem ersten Förderband während des Fördervorgangs eine Verminderung der Schichtdicke erfolgt, da unter dem Einfluß der Schwerkraft obenaufliegenden Bestandteile nach unten abrollen und erst ganz zum Schluß mitgenommen werden. Hierbei ist das Förderband zweckmäßigerweise als Trogförderband ausgebildet, wobei auf der Förderbandfläche selbst Mitnehmerstege oder dergl. angeordnet sind, die derartige, vom Haufwerk auf dem Förderband abrollende Teile wie Dosen, Steine oder dergl. bei direktem Kontakt mitzunehmen vermögen.

In zweckmäßiger weiterer Ausgestaltung der erfindungsgemäßen Anlage ist vorgesehen, daß an der Übergabestelle zwischen dem ersten und dem zweiten Förderband über dem ersten Förderband eine Einrichtung zur Beschleunigung des Förderstromes, vorzugsweise ein mit Vorsprüngen versehenes angetriebenes Endlosband angeordnet ist. Diese Beschleunigungseinrichtung, die zweckmäßigerweise mit der gleichen Laufgeschwindigkeit arbeitet wie das zweite Förderband, erfaßt die Oberfläche des auf dem ersten Förderband liegenden Haufwerks und gibt diesem bereits die Beschleunigung auf die Geschwindigkeit des nachfolgenden zweiten Förderbandes. Ein weiterer Vorteil dieser Beschleunigungseinrichtung besteht darin, daß im Haufwerk auf dem ersten Förderband enthaltene Knäuel aus Folien oder dergl. auseinandergezogen und auf dem zweiten Förderband dann als langgestrecktes Band weitertransportiert werden können.

Die erfindungsgemäß vorgesehene ansteuerbare Vorrichtung zum Abweisen von Störstoffen ist zweckmäßigerweise am Ende des zweiten Förderbandes angeordnet, da in diesem Bereich die Abfälle einen hohen Grad an Vereinzelung erreicht haben, so daß hier ein gezieltes Abweisen vorhandener Störstoffe möglich ist. Sollte sich bei der Überprüfung zeigen, daß der überwiegende Teil der abgekippten Einheit Störstoffe enthält, so kann diese Einheit vollständig über den Abweiser aus dem Förderstrom abgezweigt werden.

In einer bevorzugten Ausgestaltung der erfindungsgemäßen Anlage ist ferner vorgesehen, daß an der Aufnahmestelle eine Registriereinrichtung vorgesehen ist, die die Identifizierungskennzeichnung des jeweils eingefahrenen Behälters und eine Identifizierung des abkippenden Fahrzeugs aufnimmt, daß an der Abkippvorrichtung eine mit der Registriereinrichtung in Verbindung stehende Einrichtung zur Aufnahme der Identifizierungskennzeichnung des jeweils abkippenden Behälters angeordnet ist und daß die Betätigungsvorrichtung für die Abweisevorrichtung auf die Registriereinrichtung aufgeschaltet ist, so daß eine Zuordnung der auszusondernden Störstoffe zu dem zugehörigen Behälter gegeben ist. Mit Hilfe einer derartigen Registriereinrichtung ist eine automatische Zuordnung von Störstoffen zum jeweiligen Anlieferer möglich und zwar immer dann, wenn die Abweisevorrichtung zur Aussonderung von Störstoffen betätigt wird. Die ausgesonderten Störstoffe können dann daraufhin untersucht werden, ob sie in der Anlage durch Zumischen in den weiteren nachfolgenden Förderstrom in "Verdünnung" wieder eingespeist werden können oder ob es sich um Störstoffe handelt, die auf einer Sonderdeponie abzulagern sind. Da die Zuordnung zum Anlieferer gegeben ist, kann dieser entweder dazu angehalten werden, derartige Konzentrationen an Störstoffen nicht in der normalen Anlieferung abzugeben, sondern dies bereits vorab mitzuteilen oder aber er kann bei Sonderabfällen dann mit der Zahlung der hierfür fälligen Sondergebühren belastet werden.

In weiterer Ausgestaltung der erfindungsgemäßen Anlage ist vorgesehen, daß an der Abkippstelle eine befahrbare, klappbare Abdeckung vorgesehen ist, unter die der jeweils zu füllende Behälter bewegbar ist. Diese Anordnung hat den Vorteil, daß die anliefernden Fahrzeuge die Abkippstelle nur in Vorwärtsfahrt anfahren, so daß ein Zurücksetzen entfällt, wobei unabhängig von der Fahrzeuglänge der Anhaltepunkt durch eine Lichtschranke oder dergl. die das Heck das Fahrzeugs erfaßt, signalisiert wird. Erst dann klappt die Abdeckung auf und das Fahrzeug kann entleert werden.

In weiterer Ausgestaltung der erfindungsgemäßen Anlage ist vorgesehen, daß zwischen Aufnahmestelle und Abkippvorrichtung wenigstens ein mit der Transportvorrichtung in Verbindung stehender Stapelbereich für gefüllte und/oder für leere Behälter vorgesehen ist. Die Aufnahme der jeweiligen Anlieferung in einem gesonderten, markierten Behälter erlaubt es, hier ein Zwischenlager zu errichten, ohne daß es erforderlich ist, die jeweilige Ladung bereits am Anlieferungstag zu kontrollieren. Dies ist insbesondere für Verbrennungsanlagen von Bedeutung, die im Hinblick auf einen kontinuierlichen Betrieb einen genügend großen Abfallvorrat als Zwischenpuffer, beispielsweise zur Überbrückung von Sonn- und Feiertagen benötigen. Die einzelnen Behälter des Zwischenlagers können hierbei nebeneinander und/oder übereinander platzsparend abgestellt werden, wobei aufgrund der Identifizierungskennzeichnung die Zuordnung des Behälterinhaltes zur dem jeweiligen Anlieferer erhalten bleibt. Die Identifizierungskennzeichnung des jeweiligen Behälters wird erst dann wieder freigegeben, wenn dieser Behälter aus der Abkippvorrichtung abgezogen und für eine neue Beladung bereitgestellt wird. Dieses Zwischenlager kann beispielsweise in einer gesonderten Halle untergebracht werden, die mit einer entsprechenden Absaugvorrichtung versehen ist, so daß hier eine Geruchsbelästigung der Umgebung weitgehend vermieden wird. In der Halle selbst wird lediglich eine Bedienungsperson für das Stapelmittel benötigt, das entweder in Form eines Kranes mit klimatisierter Kabine die Halle befährt oder aber aus einem gesonderten Leitstand ferngesteuert betätigt wird.

Die Erfindung wird anhand schematischer Zeichnungen eines Ausführungsbeispieles näher erläutert. Es zeigen:

Fig. 1     eine Aufsicht auf eine Anlage in Form eines Fließbildes,

Fig. 2     in einer Seitenansicht schematisch eine Aufnahmestelle (Bereich A in Fig. 1),

Fig. 3     in einer Seitenansicht die Abkippstelle mit den Einrichtungen zur Vermindung der Schüttdichte (Bereich B in Fig. 1).

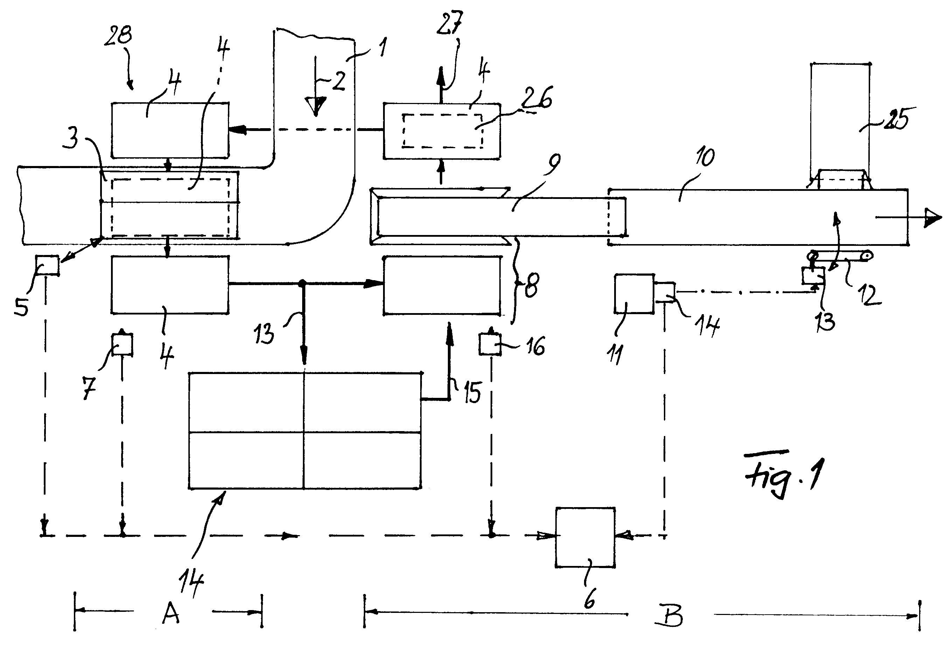

Bei der in Form eines Grundriß-Fließbildes in Fig. 1 dargestellten Anlage ist ein Zufahrtsweg 1 für Abfallsammel- und/oder Transportfahrzeuge vorgesehen, der in Richtung des Pfeiles 2 befahren wird. Das Fahrzeug überfährt hier jeweils eine aufklappbare Abdeckung 3 und zwar so weit, bis das Heck des Fahrzeugs die Abkippstellung erreicht hat. Unterhalb der Abdeckung 3 befindet sich ein offener Behälter 4, der vorzugsweise ein größeres Leervolumen besitzt, als das größte Leervolumen der üblichen Anliefer-Fahrzeuge, so daß nach dem Aufklappen der Abdeckung das Fahrzeug in üblicher Weise durch Abkippen über die Heckkante in den Behälter 4 entladen werden kann. Der Behälter 4 ist hierbei mit einer Identifizierungsmarkierung versehen, die von einem Erfassungsmittel 5 für eine Datenerfassung erfaßt wird, in das zugleich eine Identifizierung des abladenden Fahrzeugs eingegeben wird. Dieses Erfassungsmittel 5 ist auf eine Registriereinrichtung 6 aufgeschaltet.

Nach Beladung des Behälters 4 wird dieser in den Bereich einer Erfassungsvorrichtung 7 verfahren, in der das Gewicht und/oder das Volumen der aufgenommenen Ladung in bezug auf die Identifizierungskennzeichnung des Behälters wiederum erfaßt und der Registriereinrichtung 6 zugeführt wird.

Im Normalbetrieb wird dann der Behälter über das Fördermittel zu einer Abkippvorrichtung 8 verfahren, mit der sein Behälterinhalt auf ein Fördermittel, beispielsweise ein Förderband 9 abgeworfen wird. Der geleerte Behälter wird in einer Nachwiegestation gewogen, so daß beispielsweise im Vergleich zum bekannten Leergewicht kontrolliert werden kann, ob der Behälter Anbackungen enthält und noch gereinigt werden muß oder ob er vollständig entleert ist. Zu reinigende Behälter werden in eine hier nicht näher dargestellte Reinigungsstation ausgefahren (Pfeil 27). Einwandfrei entleerte Behälter werden dann über das Fördemittel in eine Bereitschaftsposition 28 im Bereich der Aufnahmestelle und von dort unter die Abdeckung 3 verfahren.

Ein Teil der gefüllten Behälter kann nun über eine Abzweigung 13 aus dem vorbeschriebenen Kreislauf noch vor der Abkippstelle 8 abgezweigt und in einen Stapelbereich 14 zur Bildung eines Materialpuffers verfahren werden. Aus diesem Stapelbereich 14 können die einzelnen Behälter dann bei Bedarf abgezogen und über entsprechende Fördervorrichtungen (Pfeil 15) wieder der Abkippstelle 8 zugeführt werden. Da der Ankippstelle 8 wiederum eine Einrichtung 16 zur Erfassung der Identifizierungskennzeichnung des Behälters zugeordnet ist, die auf die Registriereinrichtung 6 aufgeschaltet ist, wird zwangsläufig jeder abkippende Behälter wiederum erfaßt, so daß auch noch länger im Stapelbereich verbliebene Behälter dem jeweiligen Anlieferer des Behälterinhaltes zugeordnet werden können.

Es ist nun ohne weiteres zu erkennen, daß das vorstehend anhand von Fig. 1 wiedergegebene Grunschema sowohl im Bereich der Aufnahmestelle als auch im Bereich der Abkippstelle durch Parallelanordnung von mehrere Einrichtungen erweitert werden kann, so daß beispielsweise mehrere Fahrzeuge zugleich ihre Ladung abkippen können. Bei sehr vielen Aufnahmestellen ist es u. U. zweckmäßig, mehrere Abkippstellen mit jeweils einer nachfolgenden Einrichtung zur Verminderung der Schüttdichte vorzusehen. Grundsätzlich können jedoch mehrere Aufnahmestellen auf eine Abkippstelle arbeiten, zumal insbesondere bei Verbrennungsanlagen über den Stapelbereich 14 eine Pufferung möglich ist.

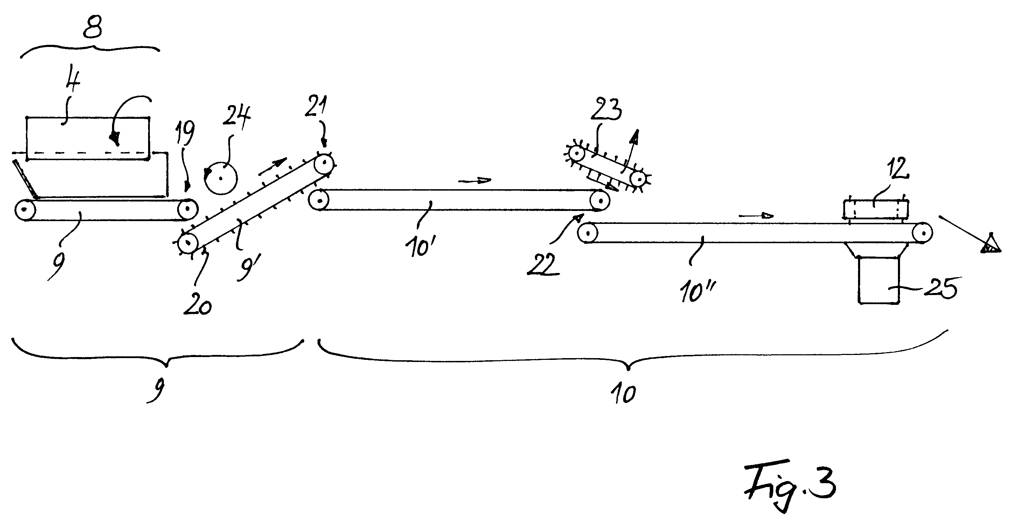

Der Bereich zur Verminderung der Schüttdichte besteht im wesentlichen aus zwei oder mehr aufeinanderfolgenden Längsfördermitteln, beispielsweise Förderbändern, die mit zunehmend höherer Geschwindigkeit laufen, so daß die über die Abkippvorrichtung 8 abgeworfene Ladung mit zunehmender Verringerung der Schüttdichte in einem fortlaufenden Linienhaufwerk auseinandergezogen wird. In Fig. 1 ist zur Vereinfachung der Darstellung lediglich ein weiteres, an das Förderband 9 anschließendes Förderband 10 dargestellt, das mit entsprechend höherer Geschwindigkeit als das Förderband 9 läuft. Eine weitere detaillierte Darstellung und Beschreibung dieses Bereiches erfolgt anhand der Seitenansicht in Fig. 3.

Das auf dem Förderband 10 aus einem abgekippten Behälterinhalt in geringer Schüttdichte auseinandergezogene Linienhaufwerk kann nun von einem Leitstand 11 aus auf das Vorhandensein von Störstoffen kontrolliert werden. Der Leitstand 11 befindet sich hierbei zweckmäßigerweise an der Übergabestelle zwischen dem Förderband 9 und dem Förderband 10. Oberhalb des Förderbandes 10 können ggf. automatisch arbeitende Detektoren angeordnet sein, die auf bestimmte, optisch nicht ohne weiteres festzustellende Störstoffe eingestellt sind.

Am Förderband 10, vorzugsweise in seinem Endbereich, ist eine ansteuerbare Abweisevorrichtung 12 angeordnet, die mit einem ansteuerbaren Antrieb 13 in Verbindung steht. Der Antrieb 13 ist über eine Betätiungsvorrichtung 14 vom Leitstand 11 aus bedienbar, so daß über die Bedienungsperson auf dem Leitstand 11 und/oder über etwa vorhandene automatische Detektoren bei Erreichen dieser Störstoffe des Abweisungsbereiches der Abweiser in den Förderstrom eingreift und die Störstoffe beispielsweise seitlich in einen Sammelbehälter 25 abgewiesen werden. Die Betätigungseinrichtung 14 ist hierbei wiederum auf die Registriereinrichtung 6 aufgeschaltet, so daß über die Zuordnung der jeweils auf dem Band befindlichen Ladung zu dem abkippenden Behälter auch die Zuordnung zum Anlieferer gegeben ist. Nach dem Abkippen und dem Nachwiegen des jeweils gekippten Behälters wird die Identifizierungskennzeichnung des jeweiligen Behälters in der Registriereinrichtung für eine neue Beladung freigegeben. Die vom Förderband 10 ablaufenden Abfallmengen werden dann den weiteren Anlagen zur Aufbereitung, wie Zerkleinerung, Klassierung, Sortierung, Verbrennung, Deponierung, etc. zugeführt.

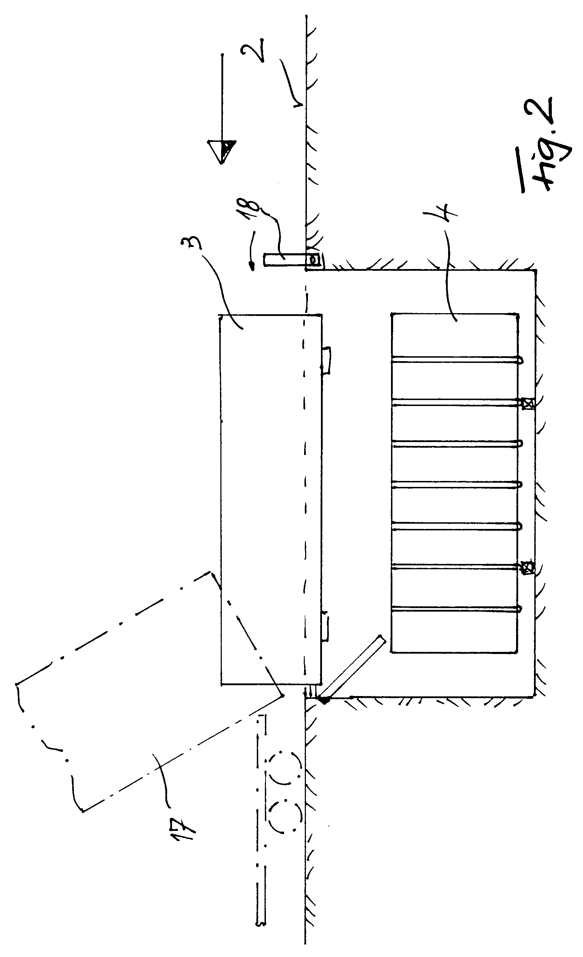

Die Seitenansicht in Fig. 2 zeigt in einer schematischen Seitenansicht die Ausbildung der Aufnahmestelle A. Der Behälter 4 befindet sich auf einem nicht näher dargestellten Fördermittel unterhalb einer zweiteiligen Abdeckklappe 3, die längsgeteilt ist und im Bereich der Grube zur Aufnahme des Behälters 4 zugleich einen Teil der Fahrrampe 2 bildet. Sobald ein hier nicht näher dargestelltes Fahrzeug die nur durch den Kippaufbau 17 angedeutete Entladeposition erreicht hat, werden die beiden die Abdeckung 3 bildenden Klappen hochgeklappt, so daß die Öffnung des Behälters 4 freiliegt und der Kippaufbau in den Behälter 4 entleert werden kann. Durch eine sich beim Öffnen der Abdeckung 3 automatisch aufrichtende und quer zur Fahrtrichtung ausgerichtete Sperreinrichtung 18 wird zugleich der Grubenrand im Bereich der Zufahrtseinrichtung abgesichert. Diese Sperreinrichtung 18 kann beispielsweise Teil der Abdeckung sein. Die die Abdeckung 3 bildenden Klappen können hierbei hydraulisch oder elektromotorisch betätigbar sein. Eine ähnliche Sicherungseinrichtung kann im Bereich der Entleerungsposition für das entladende Fahrzeug vorgesehen sein und zwar in der Weise, daß bei geöffneter Abdeckung 3 durch automatisch ausfahrende Sperrbalken selbst bei einem versehentlichen Einlegen des Rückwärtsganges ein Überfahren und damit ein Abstürzen des Fahrzeugs in den Behälter 4 verhindert wird.

Die Anordnung kann hierbei so ausgebildet werden, daß die Klappen der Abdeckung 3 automatisch schließen, sobald das Fahrzeug seine Entleerungsposition verläßt.

Wie Fig. 3 in einer schematischen Seitenansicht des Bereichs B zeigt, ist unterhalb der Abkippvorrichtung 8 für einen gefüllten Behälter 4 ein erstes Förderband 9 angeordnet, dessen Abwurfbereich 19 auf ein Förderband 9' fördert, das unter einem Winkel ansteigend fördert und dessen Förderfläche mit Stegen 20 versehen ist. Das Förderband 9' wird im Vergleich zum Förderband 9 mit höherer Fördergeschwindigkeit angetrieben.

Da insbesondere Hausmüll auch in Säcken angeliefert wird, die in den Müllsammelfahrzeugen in der Regel nicht oder nur unvollständig aufplatzen, ist es zweckmäßig, wenn im Bereich der Förderstrecke, zweckmäßigerweise im Bereich des Förderbandes 9', eine Einrichtung 24 üblicher Bauart zur Öffnung von Müllsäcken angeordnet ist.

Das Förderband 9' fördert auf ein vorzugsweise horizontal ausgerichtetes Förderband 10', das wiederum mit höherer Fördergeschwindigkeit als das Förderband 9' betrieben werden kann. Die Abwurfstelle 22 des Förderbandes 10' mündet auf ein weiteres, vorzugsweise horizontales Förderband 10''. Im Bereich der Abwurfstelle 22 ist oberhalb des Fördertrums eine Beschleunigungseinrichtung 23 angeordnet, beispielsweise in Form eines kurzen mit Querstegen versehenen Bandes, das auf die Oberfläche des auf dem Förderband 10' transportierten Haufwerks einwirkt und das mit einer Geschwindigkeit betrieben wird, die der Fördergeschwindigkeit des nachgeschalteten Förderbandes 10'' entspricht. Am Ende des Förderbandes 10'' ist dann die ansteuerbare Abweisevorrichtung 12 angeordnet.

Die Einrichtung kann nun in der Weise betrieben werden, daß mit Beginn der Entleerung des in der Abkippvorrichtung 8 befindlichen Behälters 4 bei laufenden Förderbändern der Behälterinhalt bereits auf dem Band 9 etwas auseinandergezogen wird. Da Abfälle, insbesondere Haus- oder Gewerbeabfälle, die über kompaktierende Sammelfahrzeuge angeliefert werden, ballenförmig abgeworfen werden, ergibt sich durch die ansteigende Förderung auf dem Förderband 9' eine Auflösung in der Weise, daß lose als Ballen aufliegende Teile gegen die Förderrichtung nach unten zunächst abrollen und dann bei dünner werdender Beladung endgültig aufgenommen und weitergefördert werden. Beim Abwurf auf das Förderband 10' wird infolge der erhöhten Geschwindigkeit der Materialstrom bereits auseinandergezogen und die Schüttdichte etwas verringert. Der das Abwurfende 22 des Förderbandes 10' erreichende Materialstrom wird nun mit seiner Oberfläche von der Beschleunigungseinrichtung 23 auf seiner Oberfläche erfaßt und hier beschleunigt. Etwa vorhandene Folienballen oder dergl. werden erfaßt und auseinandergezogen und somit in mehr oder weniger gestreckter Form auf dem anschließenden Förderband 10'' abgelegt. Die Beschleunigungseinrichtung 23 ist hierbei zweckmäßig schwenkbar ausgebildet, so daß ein Ausweichen bei größeren Haufwerkballen möglich ist.

Im Bereich des Förderbandes 10', vorzugsweise aber im Bereich des Förderbandes 10'', das schon eine sehr geringe Schüttdichte des transportierten Haufwerks aufweist, kann nun optisch oder über Detektoren das Haufwerk auf mögliche Störstoffe kontrolliert werden, so daß etwa vorhandene Störstoffe über die Abweiseeinrichtung 12 aus dem Förderstrom ausgeschieden werden können. Die Förderbänder können hierbei kontinuierlich angetrieben werden, wobei lediglich über eine optische oder mechanische Kontrolle sicherzustellen ist, daß das Förderband 9 vollständig leergelaufen ist, bevor ein neuer Behälter 4 abgekippt werden kann.

Zweckmäßig ist es hierbei, wenn zwischen dem Signal "Förderband 9 leer" und der Freigabe der Kippvorrichtung 8 für einen neuen Kippvorgang noch eine "Sperrzeit" vorgegeben wird, so daß über den zwischen zwei Entleerungsmengen liegenden Zwischenraum eine einwandfreie Zuordnung der jeweiligen Entleerungsmenge zu dem entleerenden Behälter sichergestellt ist.

Da die Kippvorrichtung 8 trichterförmig mit dem Förderband 9 in Verbindung steht, ist zweckmäßigerweise oberhalb des Förderbandes 9 ein Rost angeordnet, der ggf. mit einer Reinigungsvorrichtung versehen sein kann, durch den sperrige Teile, wie Bretter, Latten, Eisenstangen oder dergl. zurückbehalten und aus dem Förderstrom ausgeschieden werden können.

**Patentansprüche**

1. Verfahren zur Kontrolle und zur Vorsortierung von aufzubereitenden Abfällen bei der Anlieferung, **dadurch gekennzeichnet,** daß jede Einheit angelieferter Abfälle gesondert aufgenommen und markiert wird, daß jeweils die gesondert aufgenommene markierte Einheit in ihrer Schüttdichte durch Ausbreiten vermindert und hierbei einer optischen und/oder automatisierten Kontrolle über Detektoren in bezug auf Zusammensetzung und/oder das Vorhandensein von Störstoffen unterzogen wird, daß etwa festgestellte Störstoffmengen ausgeschieden und in bezug auf die markierte Einheit registriert werden und daß die vorkontrollierten Abfallmengen der weiteren Behandlung zugeführt werden.

2. Verfahren nach Anspruch 1, dadurch gekennzeichnet, daß die Verminderung der Schüttdichte durch fortlaufendes Ausbreiten in einer Linie erfolgt.

3. Verfahren nach Anspruch 1 oder 2, dadurch gekennzeichnet, daß das Ausbreiten in einer Linie durch Abkippen bei fortlaufendem Abtransport der jeweils abkippenden Menge erfolgt.

4. Verfahren nach einem der Ansprüche 1 bis 3, dadurch gekennzeichnet, daß das Ausbreiten in wenigstens zwei aufeinanderfolgenden Stufen erfolgt, wobei die weitere Verringerung der Schüttdichte durch Abwurf auf eine zweite Transportlinie mit höherer Transportgeschwindigkeit erfolgt.

5. Verfahren nach einem der Ansprüche 1 bis 4, dadurch gekennzeichnet, daß die optische und/oder mechanisierte Kontrolle der ausgebreiteten Abfälle im Bereich der zweiten Transportlinie erfolgt.

6. Anlage zum Kontrollieren und Vorsortieren von aufzubereitenden Abfällen, bei der die von Fahrzeugen angelieferten Abfälle zunächst abgekippt und auf das Vorhandensein von Störstoffen kontrolliert werden, bevor sie der weiteren Behandlung unterworfen werden, insbesondere zur Durchführung des Verfahrens nach den Ansprüchen 1 bis 5, dadurch gekennzeichnet, daß zur Aufnahme der von jedem Fahrzeug abzukippenden Ladung (Einheit) an der Aufnahmestelle ein gesonderter Behälter (4) vorgesehen ist, daß eine Transporteinrichtung für die einzelnen Behälter (4) vorgesehen ist, die die Aufnahmestelle mit einer Abkippvorrichtung (8) für die Behälter (4) verbindet, daß der Abkippvorrichtung (8) Fördermittel (9, 10) für die jeweils abzukippende Einheit, vorzugsweise wenigstens ein Förderband zur Verminderung der Schüttdichte vorgesehen ist und daß eine ansteuerbare Vorrichtung (12) zum Abweisen etwa festgestellter Störstoffe aus dem Förderstrom vorgesehen ist.

7. Anlage nach Anspruch 6, dadurch gekennzeichnet, daß die Fördermittel zur Verminderung der Schüttdichte wenigstens zwei Förderbänder (9, 10) aufweist, wobei das zweite Förderband (10) mit höherer Fördergeschwindigkeit läuft als das erste Förderband (9).

8. Anlage nach Anspruch 6 und 7, dadurch gekennzeichnet, daß das erste Förderband (9) zumindest über einen Teil seiner Länge (9') unter einem Winkel aufwärtsfördert.

9. Anlage nach einem der Ansprüche 6 bis 8, dadurch gekennzeichnet, daß an einer Übergabestelle (22) zwischen einem ersten Förderband (10') und einem zweiten Förderband (10") über dem ersten Förderband (10') eine Einrichtung (23) zur Beschleunigung des Förderstromes, vorzugsweise ein mit Vorsprüngen versehenes, angetriebenes Endlosband angeordnet ist.

10. Anlage nach einem der Ansprüche 6 bis 9, dadurch gekennzeichnet, daß am Ende des zweiten Förderbandes (10") eine ansteuerbare Abweisevorrichtung (12) zum Auscheiden von festgestellten Störstoffen aus dem Förderstrom angeordent ist.

11. Anlage nach einem der Ansprüche 6 bis 10, dadurch gekennzeichnet, daß an der Aufnahmestelle eine befahrbare Abdeckung (3) vorgesehen ist, unter die jeweils der zu befüllende Behälter (4) bewegbar ist.

12. Anlage nach einem der Ansprüche 6 bis 11, dadurch gekennzeichnet, daß jeder Behälter (4) mit einer Identifizierungskennzeichnung markiert ist.

13. Anlage nach einem der Ansprüche 6 bis 12, dadurch gekennzeichnet, daß an der Aufnahmestelle eine Registriereinrichtung (5, 6) vorgesehen ist, die die Identifizierungskennzeichnung des jeweils eingefahrenen Behälters (4) und eine Identifizierung des abkippende Fahrzeuges aufnimmt, daß an der Abkippvorrichtung (8) eine mit der Registriereinrichtung (6) in Verbindung stehende Einrichtung (16) zur Aufnahme der Identifizierungskennzeichnung des jeweils abkippenden Behälters (4) angeordnet ist und daß die Betätigungseinrichtung (14) für die Abweisevorrichtung (12) auf die Registrierungseinrichtung (6) aufgeschaltet ist, so daß eine Zuordnung der auszusondernden Störstoffe zu dem zugehörigen Behälter gegeben ist.

14. Anlage nach einem der Ansprüche 6 bis 13, dadurch gekennzeichnet, daß zwischen der Aufnahmestelle und der Abkippvorrichtung (8) jeweils ein mit der Transportvorrichtung in Verbindung stehender Stapelbereich (14) für gefüllte und/oder für leere Behälter vorgesehen ist.

15. Anlage nach einem der Ansprüche 6 bis 14, dadurch gekennnet, daß das Volumen der Behälter (4) größer ist als das größte Fassungsvermögen des größten zu erwartenden Fahrzeugs.

Fig. 1

EP 0 516 060 A2

Fig. 2

Fig.3